# DEMANDE DE BREVET EUROPEEN

(11) **EP 0 818 426 A1**
(43) Date de publication de la demande: **14.01.1998**
(21) Numéro de dépôt: 97420118.8
(22) Date de dépôt: 15.07.1997
(51) Int. Cl.: C04B 7/00, C04B 22/00

(54) **Procédé de prolongation de l'effet protecteur à long terme, d'une composition à base de ciment, vis-à-vis de la corrosion d'aciers inclus et produit permettant cette prolongation**

(30) Priorité: 12.07.1996 FR 9609032
(71) Demandeur: Société Anonyme: CIA, 38670 Chasse Sur Rhone (FR)
(72) Inventeur: Weiss, Jean-Claude, 59880 St Saulve (FR); Jannolfo, Bernard, 69480 Pommiers (FR); Douailler, Bernard, 59300 Valenciennes (FR)
(74) Mandataire: Fleurance, Raphael

(57) **Abrégé**

La présente invention concerne un procédé visant à renforcer, maintenir et prolonger l'effet protecteur, à long terme, d'une composition à base de ciment, vis-à-vis de la corrosion d'aciers inclus.

Ce but est atteint au travers d'un protocole consistant à incorporer à ladite composition de ciment et/ou dans le béton, mortier ou coulis susceptible d'être préparé à partir de cette composition, des moyens chimiques, à action prolongée, de passivation des aciers inclus, lesdits moyens comprenant des grains de silicates de calcium aptes à maintenir un pH basique ≥ à 11,8 au sein dudit béton, coulis, ces grains répondant à un profil granulométrique tel que environ 80 % de ces grains ont un diamètre voisin d'une valeur nominale ≥ 160 µm et tel que le diamètre moyen des grains est compris entre 150 et 300 µm de préférence entre 200 et 250 µm. L'invention concerne, également, un système de maintien de pH basique, *per se*, pour bétons armés, ledit système comprenant des grains de ciment de granulométrie choisie et l'utilisation dudit système, en vue de renforcer, maintenir et prolonger l'effet protecteur à long terme, vis-à-vis d'aciers inclus, d'une composition à base de ciment. Application : Additifs pour ciments et bétons armés.

## Description

Le domaine de la présente invention est celui des ciments, c'est-à-dire des matériaux pulvérulents qui, par réaction avec l'eau, donnent des matières dures et compactes, utilisées, notamment, dans le génie civil.

Plus précisément, la présente invention concerne un procédé visant à renforcer, maintenir et prolonger l'effet protecteur, à long terme, d'une composition à base de ciment, vis-à-vis de la corrosion d'éléments en métal, par exemple en acier, susceptibles d'être inclus dans le béton, le mortier, le coulis ou analogue, obtenu par mélange de la susdite composition à base de ciment avec de l'eau. Ces éléments métalliques peuvent être, e. g., des éléments d'armature de renfort.

La présente invention vise, également, un produit destiné à prolonger renforcer et maintenir, à long terme, l'effet protecteur d'une composition à base de ciment vis-à-vis de la corrosion d'aciers inclus, de même que l'utilisation dudit produit dans des ciments, mortiers, coulis, bétons ou analogues.

L'invention vise enfin un procédé de préparation d'un béton destiné à être armé.

Le ciment contient, principalement, des silicates de calcium Ca₂SiO₄ (variété β-C₂S) et Ca₃SiO₅ (C₃S), ce dernier sous forme métastable. Ce sont surtout ces composants principaux qui confèrent au ciment solidifié ses propriétés mécaniques.

Pour des raisons évidentes d'amélioration de résistance mécanique, il est constant, dans le domaine du génie civil, d'introduire, dans les ouvrages en béton préparé à partir de ciment et d'eau, des armatures métalliques de renfort. Ces dernières sont, généralement, réalisées en acier, métal apte à se passiver en surface. La passivation est un phénomène qui permet de conférer au métal une résistance à la corrosion, par exemple, grâce à la formation d'une couche superficielle protectrice d'oxyde. Cependant, la corrosion reste un souci majeur dans le domaine technique considéré, nonobstant l'emploi de tels aciers pour les armatures de béton. Le problème est d'autant plus aigu que cette résistance à la corrosion des armatures doit se pérenniser sur de longues durées (plusieurs dizaines d'années), afin d'éviter, autant que faire se peut, l'altération des propriétés mécaniques des armatures, avec toutes les conséquences que l'on imagine aisément.

On sait que, dans les bétons frais, les armatures en acier ne subissent pas ou peu d'attaques oxydantes, car elles sont immergées dans un milieu (ciment + eau) dont le pH est compris entre 11,5 et 13,5. Or, dans cette gamme de pH, il se produit un phénomène de passivation. Dans un béton, cette passivation est assurée par la présence de Portlandite - Ca(OH)₂ -, qui est libérée lors de la prise et du durcissement du ciment, suite à l'hydratation des silicates calciques contenus dans ledit ciment :

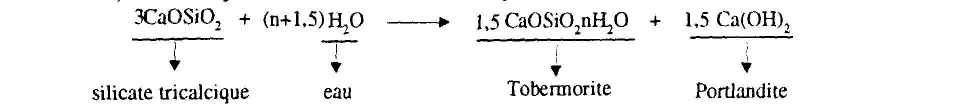

La Portlandite ou dihydroxyde de calcium (chaux éteinte) assure le maintien du pH aux alentours de 12,5 dans l'espace où elle diffuse, en raison de sa solubilité dans l'eau. Cette valeur est optimale pour assurer la passivation des armatures du béton.

Malheureusement, cette alcalinisation salutaire n'est pas suffisamment pérenne pour garantir une passivation à très long terme (≥ 25 ans) des aciers des armatures, car il se produit dans les bétons connus, une carbonatation progressive de la portlandite, avec diminution du pH, ce qui conduit à la suppression de la protection contre la corrosion des armatures.

L'art antérieur connaît un certain nombre de propositions techniques qui visent à résoudre, en vain, le problème de la protection pérenne des armatures du béton. Parmi ces propositions antérieures, on peut citer la protection cathodique et la réalcalinisation. Ces deux techniques sont d'utilisation délicate et onéreuse. La réalcalinisation est d'une efficacité toute relative à long terme et présente, en outre, l'inconvénient d'engendrer des risques secondaires, tels que l'alcali-réaction ou, pire encore, la corrosion alcaline, qui ont des répercussions encore plus négatives que le défaut auquel on vise à remédier à la base.

Outre la mise en oeuvre de ces techniques de protection, il a également été imaginé, auparavant (éventuellement en complément de ces techniques) d'utiliser des aciers spéciaux (galvanisés, phosphatés, inoxydables) pour les armatures métalliques. De tels aciers présentent, certes, une résistance améliorée vis-à-vis de la corrosion, mais ont un coût rédhibitoire.

La demande PCT WO 87 03 577 concerne un mélange de mortier sec pour enduction de surface, utile pour prévenir ou éliminer les détériorations de surface sur des ouvrages en béton armé. Ce mélange de mortier sec contient :
- un liant inorganique hydraulique (e.g. ciment de Portland PZ 275)
- un granulat constituant une réserve d'alcalinité réhausseur de pH (e.g. clinker de ciment portland/100-1000 µm).
- éventuellement un matériau synthétique sous forme de solution ou de dispersion, en l'occurence une dispersion pulvérulente de résine acrylique,
- éventuellement un additif classique formé par du sable,
- et éventuellement d'autres additifs tels que : antigel, colorant, fibre, pouzzolane, laitier, fluidifiant, étanchéifiant, agent anti-corrosion...

Les grains grossiers de clinker de ciment de portland assurent une production prolongée de Ca(OH)₂, de façon à maintenir le pH à une valeur alcaline autorisant la passivation des métaux inclus - voir page 5 ligne 10 à page 6 ligne 11 et page 7 lignes 24 à 28.

La description de cette demande PCT explique que cette réserve alcaline contrebalance l'acidification induite par l'acide carbonique, provenant de la réaction du CO₂ gazeux diffusant dans le ciment avec l'eau atmosphérique.

Les concentrations en granulats d'alcalinité sont de 2-75, 5-50, 10-25 % en poids sur sec. (4, 8, 20 et 24 % dans les exemples).

Les teneurs en silicates calciques de ces clinkers sont supérieurs à 30, de préférence à 45 et plus préférentiellement encore à 55 %. (35, 48, 56 % dans les exemples).

Le mortier selon cette demande PCT WO 87/03 577 est une enduction (une peinture) pour ouvrages en béton armé. Il n'est pas destiné à inclure des armatures métalliques. En outre, ce mortier ne comporte pas de sélection d'un profil granulométrique particulier pour les grains précurseurs de basicité.

Il s'ensuit que ce mortier selon le WO 87/03577, destiné à constituer une couche externe d'impérméabilisation au SO₂ et CO₂ d'ouvrages en béton armé, ne permet pas de protéger directement les armatures métalliques de la corrosion à long terme. Il agit simplement comme une protection pelliculaire.

La Portlandite générée en surface ne peut pas diffuser au coeur du béton (sur plusieurs cm) pour venir à proximité des armatures métalliques afin d'assurer le maintien du pH alcalin et ainsi la passivation.

En outre, étant donné que le béton est fissurable, la barrière de surface qui est destinée à former ce mortier, sera inopérante dans la prévention de la corrosion, dès lors que des fissures apparaîtront. Le CO₂ pourra pénétrer dans la masse du béton armé par les fissures et carbonater ce dernier.

Il apparaît donc qu'il n'existe pas à ce jour, dans l'art antérieur, de proposition technique simple et peu onéreuse susceptible de constituer une solution satisfaisante à ce problème de corrosion très long terme (supérieure au demi-siècle) des armatures de renforcement d'ouvrages constitués par un matériau obtenu à partir de ciment et d'eau (béton, mortier ou coulis armé).

Dans cet état de faits, l'un des objectifs essentiels de la présente invention est de pallier à cette carence, en fournissant un procédé visant à prolonger, renforcer et maintenir l'effet protecteur, à très long terme, d'une composition à base de ciment, vis-à-vis de la corrosion d'aciers y inclus.

Un autre objectif essentiel de l'invention est de fournir un tel procédé de pérennisation de la résistance à la corrosion d'armatures métalliques de béton armé, qui soit simple à mettre en oeuvre, économique et qui n'affecte pas les propriétés, notamment mécaniques, attendues pour les bétons armés.

Un autre objectif essentiel de la présente invention est de fournir un procédé d'adjuvantation de ciment, voire de béton, de mortier ou de coulis (obtenu à partir de ciment et d'eau), de manière à conférer à ces matériaux la faculté de suspendre le plus longtemps possible l'attaque corrosive des éléments métalliques susceptibles d'être inclus dans ces matériaux, ledit procédé devant être parfaitement compatible avec les protocoles industriels actuels de préparation de ciments, bétons, mortiers, coulis ou analogues.

Un autre objectif essentiel de la présente invention est de proposer des moyens visant à prolonger, renforcer et maintenir l'effet protecteur, à très long terme, d'une composition à base de ciment, vis-à-vis de la corrosion d'acier inclus, lesdits moyens devant être économiques, simples à mettre en oeuvre et significativement performants quant à la prolongation des durées de résistance à la corrosion des armatures métalliques considérées.

Un autre objectif essentiel de la présente invention est de proposer une utilisation industrielle, concrète et pratique, des susdits moyens de prolongation de l'effet protecteur, à long terme, d'une composition à base de ciment, d'un béton, d'un mortier, d'un coulis ou analogue - obtenu à partir de ciment et d'eau -, vis-à-vis de la corrosion d'aciers susceptibles d'être inclus dans ces matériaux (ciment + eau).

Un autre objectif essentiel de la présente invention est de fournir un procédé d'obtention d'un béton dans lequel des éléments métalliques d'armature de renfort sont destinés être inclus, permettant d'atteindre par adjuvantation homogène de moyens de passivation à effet prolongé, une protection à long terme des armatures vis-à-vis de la corrosion.

La Portlandite assure - de façon limitée dans le temps - le maintien d'un pH alcalin de passivation dans le composite ciment + eau fraîchement préparé. Cette Portlandite est malheureusement neutralisée par de l'acide carbonique provenant de la dissolution du CO₂ atmosphérique dans l'eau. Ainsi, au fur et à mesure que le milieu ciment + eau + armature acier - se charge en "H₂CO₃", la fonction hydroxyde de Ca(OH)₂ disparait. Cela s'accompagne, naturellement, d'une diminution du pH jusqu'à une valeur proche de 10, qui ne protège plus les armatures en acier contre l'oxydation, puisqu'elle ne permet pas la poursuite de la passivation. Cette neutralisation de la Portlandite par le CO₂ atmosphérique dépend de la diffusion des gaz au travers du milieu poreux que constitue le béton, lequel contient toujours de l'eau libre apte à engendrer la transformation de CO₂ → "H₂CO₃".

Forte de ces constats, la demanderesse en a déduit, de manière originale et avantageuse, qu'il convenait d'assurer, sur un très long terme, le maintien dans le béton d'un pH alcalin optimal de passivation des métaux sujets à la corrosion, en sélectionnant une coupe granulométrique spécifique d'un précurseur granuleux de basicité, activable par l'eau.

C'est ainsi que la présente invention concerne un procédé visant à renforcer, maintenir et prolonger l'effet protecteur, à très long terme, d'une composition à base de ciment, vis-à-vis de la corrosion d'aciers inclus, un tel procédé étant du type de ceux consistant à incorporer à ladite composition de ciment et/ou dans le béton, mortier ou coulis susceptible d'être préparé à partir de cette composition, des moyens chimiques, à action prolongée, de passivation des aciers inclus au sein du béton, mortier ou coulis, lesdits moyens comprenant un système de maintien d'un pH basique, de préférence supérieur ou égal à 11,8 au sein dudit béton, mortier ou coulis, le susdit système comprenant au moins un précurseur capable de réagir avec de l'eau, pour produire un agent apte à maintenir durablement le pH dans les limites de 11,8 à 13,2, de préférence voisin de 12,5,
ce procédé étant caractérisé en ce que l'on met en oeuvre un précurseur composé de grains répondant à un profil granulométrique tel que environ 80 % de ces grains ont un diamètre voisin d'une valeur nominale ≥ 160 µm et tel que le diamètre moyen des grains est compris entre 150 et 300 µm de préférence entre 200 et 250 µm.

Pour simplifier, on désignera par "béton", dans tout le présent exposé, tout mélange (ou composite) de ciment et d'eau, éventuellement complété par des charges et des additifs, destiné à servir de matrice d'inclusion pour des armatures métalliques de renfort. Le terme "béton" désigne un tel mélange, aussi bien avant qu'après la solidification.

Dans la définition de l'invention donnée ci-dessus, l'expression "acier inclus" doit se comprendre comme faisant référence aux éléments métalliques, ferreux, susceptibles d'être inclus dans des bétons (composites eau/ciment).

L'incorporation desdits moyens chimiques doit être envisagée à tout moment dans le processus d'élaboration du béton. Lesdits moyens chimiques peuvent ainsi être ajoutés au ciment de base et/ou l'eau et/ou aux éventuelles charges et additifs. Ils peuvent être, également, apportés lors du mélange des différents constituants du béton, jusqu'au moment de la mise en place.

Compte tenu de la présence permanente d'eau dans le béton, il est apparu judicieux d'exploiter cela en concevant un système de maintien d'un pH basique, comprenant au moins un précurseur capable de réagir avec de l'eau, pour produire un agent apte à maintenir durablement le pH dans les limites de 11,8 à 13,2 et, de préférence, à une valeur voisins de 12,5.

Ainsi, pour autant que le système de maintien de pH des moyens chimiques de l'invention soit toujours présent en quantité suffisante et de façon homogène dans le milieu en béton, il s'ensuivra une génération d'un agent basique, tel que la Portlandite, propre à stabiliser le pH à la valeur souhaitée, en particulier là où elle est le plus nécessaire c'est-à-dire à proximité des armatures métalliques.

L'un des fondements inventifs de la présente invention tient en la mise au point d'un système de maintien de pH basique constitué de grains dont la granulométrie est choisie pour maintenir le pH au sein du béton dans la plage de basicité souhaitée et pendant une durée au moins égale à 30 ans, de préférence égale à 50 ans.

La demanderesse a eu le mérite de sélectionner une coupe granulométrique spécifique et approprié pour les grains pourvoyeurs de basicité et de préconiser le mélange homogène des grains lors de la préparation du béton (ciment + eau) de manière à assurer la présence uniforme des grains dans la masse du béton à proximité des armatures métalliques, de façon à garantir dans ces zones proximales le maintien du pH à une valeur passivante.

Les grains, mis en oeuvre dans le procédé selon l'invention, sont, en fait, des générateurs permettant la libération prolongée d'agents basiques stabilisateurs du pH à la valeur optimale de passivation.

Suivant une disposition préférée du procédé selon l'invention, on met en oeuvre un système de maintien composé de grains précurseurs de basicité constitués à 65 % au moins de silicates de calcium sous forme bi et/ou tri-calcique.

De manière astucieuse, il est ainsi proposé, conformément à l'invention, d'utiliser des grains, composés essentiellement de silicate de calcium, qui s'obtiennent par différents procédés aptes à les produire à la granulométrie voulue. La demanderesse est d'autant plus méritante d'avoir exploité et valorisé la taille de ces grains dans le cadre de l'invention, sachant que, de tout temps, le souci majeur du cimentier fut de les éliminer car ils étaient considérés comme étant nuisibles à l'obtention de bonnes résistances mécaniques pour les bétons durcis.

S'agissant de la concentration des grains de précurseur dans le béton, on fait, avantageusement, en sorte qu'elle soit d'au moins 0,2 % en poids sur sec par rapport au ciment, de préférence comprise entre 0,5 et 3 % en poids sec de ciment et, plus préférentiellement encore, entre 0,8 et 2 % en poids sec de ciment. En pratique, cette concentration de grains est de l'ordre de 1-1,5 % poids séc de ciment, par exemple.

Associée au profil granulométrique évoqué ci-dessus, une telle concentration permet la génération continue d'ions hydroxydes basifiant et stabilisant le pH à la valeur optimale de passivation de 12,5, pendant une durée au moins égale à 30 ans pour les grains de 160 µm et à 40 ans pour des grains de 200 µm.

En tout état de cause, la concentration granulaire, de même que le profil granulométrique desdits grains, sont donnés dans le présent exposé à titre d'exemples. Il est bien entendu qu'ils peuvent varier en fonction du niveau et de la durée de protection désirée, ainsi que des caractéristiques physico-chimiques du précurseur.

Avantageusement, les grains du précurseur mis en oeuvre dans le procédé selon l'invention peuvent être produits par une adaptation dans une chaîne de fabrication cimentière. Puis, on sélectionne, parmi les fractions granulométriques récupérées, celle qui est adaptée la prolongation de l'effet protecteur vis-à-vis de la corrosion.

Comme déjà indiqué supra la ou les fractions sélectionnées peuvent être additionnées au ciment en tant que constituant secondaire granulaire ou bien encore au béton et/ou aux éléments composant celui-ci, à n'importe quel moment jusqu'au malaxage dudit béton destiné à être armé. Elles seront introduites en quantité suffisante pour obtenir le résultat escompté en terme de durée et de niveau de protection.

Selon un autre de ses aspects, la présente invention a pour objet un produit destiné à prolonger, renforcer et maintenir l'effet protecteur, à long terme, d'une composition à base de ciment vis-à-vis de la corrosion d'aciers inclus, ce produit étant caractérisé en ce qu'il est composé d'au moins d'un système de maintien d'un pH basique, un tel système comprenant au moins un précurseur apte à réagir avec de l'eau pour libérer un agent capable de maintenir, à long terme dans la composition et/ou un béton, un mortier ou un coulis susceptible d'être préparé à partir de cette composition, ledit pH à une valeur de préférence égale ou supérieure à 11,8.

Un tel produit peut, notamment, être mis en oeuvre dans le procédé selon l'invention tel que décrit supra.

La fonction visée pour ce produit selon l'invention étant la stabilisation du pH du milieu comprenant la pâte de ciment durcie entourant l'armature métallique à protéger, il est à considérer, conformément à une modalité avantageuse de l'invention, que le précurseur convenable soit formé par au moins un agent précurseur basique capable de maintenir le pH à une valeur comprise entre 11,8 et 13,2, de préférence voisine de 12,5.

S'agissant toujours du précurseur compris dans le système de maintien de pH, il est préférable que celui-ci soit composé de grains répondant à un profil granulométrique tel que environ 80 % de la masse de ces grains est d'un diamètre d'une valeur nominale égale ou supérieure à 160 µm.

De manière plus préférée encore, on privilégie, selon l'invention, des profils granulométriques en vertu desquels les grains ont un diamètre moyen supérieur à 180 µm et, de préférence, compris entre 200 µm et 250 µm.

Comme déjà précisé ci-dessus dans l'exposé relatif au procédé selon l'invention, il est apparu que la sélection de grains, constitués à 65 % au moins de silicate de calcium sous forme bi et/ou tri-calcique, est particulièrement avantageuse. En effet, de tels grains, sont propres à permettre la libération prolongée d'agents basiques au pH idéal de 12,5 qui leur permet de faire fonction de réservoir ou de système de maintien du pH optimal de passivation des aciers inclus.

Le produit selon l'invention peut constituer un additif indépendant destiné à être incorporé dans du ciment ou dans des compositions de mélanges de ciment avec de l'eau : béton, coulis, mortier ou analogues.

Il est également envisageable, selon une variante de réalisation, que le produit de l'invention soit composé :
- d'au moins un système de maintien d'un pH basique,
- d'au moins un composé supplémentaire choisi parmi les minéraux entrant dans la composition des ciments, les adjuvants et/ou additifs pour ciment, béton, mortier ou coulis et les charges susceptibles d'être associées directement ou indirectement à ces minéraux et adjuvants et/ou additifs.
- et éventuellement d'au moins un système ayant tendance à diminuer la capillarité et/ou la perméabilité du béton, de manière augmenter la durée de maintien de la réserve alcaline au delà de 60 ans.

Le mode d'emploi de ce produit est déjà donné dans l'exposé qui précède sur le procédé conforme à l'invention. Mais, s'agissant du dosage de maintien du pH dans le ciment, on précisera que le produit est caractérisé en ce qu'il entre dans une composition de ciment à raison de 0,5 à 3 % en poids sec de ciment, de préférence à raison de 0,8 à 2 % et, plus préférentiellement, à raison de 1 à 1,5 %.

Eu égard au fait que le produit de l'invention peut être mis en oeuvre à différents stades d'élaboration du milieu complexe (ciment + eau + éventuelles charges/additifs + armature métallique) siège de son activité, il est à considérer que la présente invention a pour autre objet l'utilisation du produit tel que défini ci-dessus, en vue de prolonger l'effet protecteur, à long terme, vis-à-vis d'aciers inclus, d'une composition à base de ciment, consistant à incorporer à un ciment, un béton, un mortier ou un coulis, ledit produit, à raison d'au moins 0,5 % en poids sec de ciment ou à raison d'au moins 2 kg par m³ de béton, mortier ou coulis, selon le cas.

Selon un autre de ces aspects, la présente invention concerne un procédé d'obtention d'un béton dans lequel des éléments métalliques d'armature de renfort sont destinés être inclus, caractérisé en ce qu'il consiste essentiellement à préparer un mélange homogène notamment de ciment, d'eau et de moyens chimiques, à action prolongée, de passivation des aciers inclus, lesdits moyens comprenant un système de maintien d'un pH basique, de préférence supérieur ou égal à 11,8 au sein du béton, ce système comprenant au moins un précurseur :
- capable de réagir avec de l'eau, pour produire un agent apte à maintenir durablement le pH dans les limites de 11,8 à 13,2, de préférence voisin de 12,5,
- et composé de grains répondant à un profil granulométrique tel qu'environ 80 % de cas grains ont un diamètre voisin d'une valeur nominale ≥ 160 µm et tel que le diamètre moyen des grains est compris entre 150 et 300 µm, de préférence, entre 200 et 250 µm.

Suivant une modalité avantageuse de ce procédé, on prémélange le ciment avec les grains formant les moyens chimiques à action prolongée de passivation des aciers inclus.

Avantageusement, on incorpore les grains de passivation dans le prémélange ciment/grain à raison de 0,8 à 2 % en poids sec, de préférence à raison de 1,0 à 1,5 % en poids sec,
ou dans le béton à raison d'au moins 2 kg par m³ de béton.

Les ciments concernés par l'invention peuvent être de tous types contenant des silicates de calcium comme constituants principaux.

Comme exemples de ciments, on peut citer les ciments blancs, les ciments Portland.

Le granulat de maintien du pH basique sur de longues durées peut être constitué de grains de clinker de granulométrie comprise entre 50-250 µm, avec au moins 80 % > 160 µm et ⌀ moyen = 200-250 µm.

### Exemple de composition de ciment :

On homogénéise :
- 45 parties poids : sable SIFRACO de Fontainebleau 0,0 - 5,0 mm.
- 55 parties poids : gravier 5-15 mm
- 33 parties poids : ciment blanc CEM : 42,5 LA
- 2 parties poids (1,5 %) : Granulat constitué par des grains de clinker 50- 250 µm dont l'origine est la cimenterie d'Obourg (BE). et de ⌀ moyen = 200 µm.

Pour préparer du béton, on mélange à cette composition 14 parties poids d'eau. Les armatures métalliques incluses dans ce béton ne se corrodent pas sur 40 ans au moins.

Il ressort de la présentation de l'invention prise en ses différents aspects, que celle-ci permet la prolongation significative de la durée de sauvegarde, vis-à-vis de la corrosion, des armatures métalliques susceptibles d'être incluses dans des bétons, et ce sur des durées pouvant atteindre au moins 40 ans, voire au moins 60 ans.

La réserve de précurseur basique, préconisée par l'invention pour atteindre ce but, s'avère être de mise en pratique simple et économique.

## Revendications

1. Procédé visant prolonger l'effet protecteur, à long terme, d'une composition à base de ciment, vis-à-vis de la corrosion d'aciers inclus,
du type de ceux consistant à incorporer à ladite composition de ciment et/ou dans le béton, mortier ou coulis susceptible d'être préparé à partir de cette composition, des moyens chimiques, action prolongée, de passivation des aciers inclus au sein du béton, mortier ou coulis, lesdits moyens comprenant un système de maintien d'un pH basique, de préférence supérieur ou égal à 11,8 au sein dudit béton, mortier ou coulis, le susdit système comprenant au moins un précurseur capable de réagir avec de l'eau, pour produire un agent apte à maintenir durablement le pH dans les limites de 11,8 à 13,2, de préférence voisin de 12,5,
ce procédé étant caractérisé en ce que l'on met en oeuvre un précurseur composé de grains répondant à un profil granulométrique tel que environ 80 % de ces grains ont un diamètre voisin d'une valeur nominale ≥ 160 µm et tel que le diamètre moyen des grains est compris entre 150 et 300 µm de préférence entre 200 et 250 µm.

2. Procédé selon la revendication 1, caractérisé en ce que les grains précurseurs de basicité du système de maintien sont constitués à hauteur d'au moins 65 % , de silicates de calcium sous forme bi et/ou tri-calcique et en ce que ces grains sont présents dans le ciment à raison de 0,8 à 2 % en poids sec, de préférence à raison de 1 à 1,5 %.

3. Produit destiné à prolonger l'effet protecteur, à long terme, d'une composition à base de ciment vis-à-vis de la corrosion d'aciers inclus au sein de béton, de mortier ou coulis, ce produit étant du type de ceux composés d'au moins un système de maintien d'un pH basique, un tel système comprenant au moins un précurseur apte à réagir avec de l'eau pour libérer un agent capable de maintenir, à long terme dans la composition et/ou un béton, un mortier ou un coulis susceptible d'être préparé à partir de cette composition, ledit pH à une valeur de préférence égale ou supérieure à 11,8, ce précurseur étant un précurseur d'au moins un agent basique capable de maintenir le pH à une valeur comprise entre 11,8 et 13,2, de préférence voisine de 12,5,
caractérisé en ce que le système de maintien comprend au moins un précurseur composé de grains répondant à un profil granulométrique tel que environ 80 % de ces grains ont un diamètre voisin d'une valeur nominale égale ou supérieure à 160 µm et en ce que le diamètre moyen des grains est compris entre 150 et 300 µm de préférence entre 200 µm et 250 µm.

4. Produit selon la revendication 3, caractérisé en ce que le système comprend au moins un précurseur composé de grains constitués, à 65 % au moins, de silicates de calcium sous forme bi et/ou tri-calcique.

5. Produit selon la revendication 3, caractérisé en ce qu'il est composé :
- d'au moins un système de maintien d'un pH basique,
- d'au moins un composé supplémentaire choisi parmi les minéraux entrant dans la composition des ciments, les adjuvants et/ou additifs pour ciment, béton, mortier ou coulis et les charges susceptibles d'être associées directement ou indirectement à ces minéraux et adjuvants et/ou additifs.
- et éventuellement d'au moins un système ayant tendance à diminuer la capillarité et/ou la perméabilité du béton, de manière à augmenter la durée de maintien de la réserve alcaline au delà de 60 ans.

6. Produit selon l'une quelconque des revendications 3 à 5, caractérisé en ce qu'il entre dans une composition de ciment à raison de 0,8 à 2 % en poids sec de ciment et, de préférence, à raison de 1 à 1,5 %, ou dans du béton à raison d'au moins 2 kg par m3.

7. Utilisation du produit selon l'une quelconque des revendications 3 à 6 en vue de prolonger l'effet protecteur à long terme vis-à-vis d'aciers inclus, d'une composition à base de ciment, caractérisée en ce qu'elle consiste à incorporer, à un ciment, un béton, un mortier ou un coulis, ledit produit, à raison d'au moins 0,5 % en poids sec de ciment ou à raison d'au moins 2 kg par m³ de béton, mortier ou coulis, selon le cas.

8. Procédé d'obtention d'un béton dans lequel des éléments métalliques d'armature de renfort sont destinés à être inclus, caractérisé en ce qu'il consiste essentiellement à préparer un mélange homogène notamment de ciment, d'eau et de moyens chimiques, à action prolongée, de passivation des aciers inclus, lesdits moyens comprenant un système de maintien d'un pH basique, de préférence supérieur ou égal à 11,8 au sein du béton, ce système comprenant au moins un précurseur :
• capable de réagir avec de l'eau, pour produire un agent apte à maintenir durablement le pH dans les limites de 11,8 à 13,2, de préférence voisin de 12,5,
• et composé de grains répondant à un profil granulométrique tel qu'environ 80 % de cas grains ont un diamètre voisin d'une valeur nominale ≥ 160 µm et tel que le diamètre moyen des grains est compris entre 150 et 300 µm, de préférence, entre 200 et 250 µm.

9. Procédé selon la revendication 8, caractérisé en ce que l'on prémélange le ciment avec les grains formant les moyens chimiques à action prolongée de passivation des aciers inclus.

10. Procédé selon la revendication 8 ou 9, caractérisé en ce que l'on incorpore les grains de passivation dans le prémélange ciment/grains à raison de 0,8 à 2 % en poids sec, de préférence à raison de 1,0 à 1,5 % en poids sec,
ou dans le béton à raison d'au moins 2 kg par m³ de béton.
